(19) Europäisches Patentamt / European Patent Office / Office européen des brevets

(11) **EP 3 457 739 B1**

(12) **EUROPEAN PATENT SPECIFICATION**

(45) Date of publication and mention
of the grant of the patent:
**02.12.2020 Bulletin 2020/49**

(51) Int Cl.:
*H04W 72/04* (2009.01)   *H04W 28/04* (2009.01)
*H04L 1/00* (2006.01)   *H04L 1/18* (2006.01)

(21) Application number: **17795634.9**

(22) Date of filing: **12.05.2017**

(86) International application number:
**PCT/CN2017/084246**

(87) International publication number:
**WO 2017/194016 (16.11.2017 Gazette 2017/46)**

(54) **TRANSMISSION METHOD AND APPARATUS, TRANSMISSION SYSTEM, AND STORAGE MEDIUM**

ÜBERTRAGUNGSVERFAHREN UND -VORRICHTUNG, ÜBERTRAGUNGSSYSTEM UND SPEICHERMEDIUM

PROCÉDÉ ET APPAREIL DE TRANSMISSION, SYSTÈME DE TRANSMISSION, ET SUPPORT DE STOCKAGE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **13.05.2016 CN 201610323351**

(43) Date of publication of application:
**20.03.2019 Bulletin 2019/12**

(73) Proprietor: **ZTE Corporation**
**Shenzhen, Guangdong 518057 (CN)**

(72) Inventors:
• **ZHANG, Wen**
**Shenzhen**
**Guangdong 518057 (CN)**
• **XIA, Shuqiang**
**Shenzhen**
**Guangdong 518057 (CN)**
• **CHEN, Donglei**
**Shenzhen**
**Guangdong 518057 (CN)**

(74) Representative: **Wallinger Ricker Schlotter Tostmann**
**Patent- und Rechtsanwälte mbB**
**Zweibrückenstraße 5-7**
**80331 München (DE)**

(56) References cited:
**WO-A1-2013/170464   CN-A- 101 291 452**

CN-A- 102 752 803     CN-A- 104 935 401

• INTEL CORPORATION: "Further aspects of UL grant skipping", 3GPP DRAFT; R2-162467 FURTHER ASPECTS OF UL GRANT SKIPPING, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. RAN WG2, no. Dubrovnik, Croatia; 20160411 - 20160415 2 April 2016 (2016-04-02), XP051082424, Retrieved from the Internet: URL:http://www.3gpp.org/ftp/tsg_ran/WG2_RL 2/TSGR2_93bis/Docs/ [retrieved on 2016-04-02]

• HTC: "Uplink latency reduction with prescheduling", 3GPP DRAFT; R1-162530 UPLINK LATENCY REDUCTION WITH PRESCHEDULING, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRAN , vol. RAN WG1, no. Busan, Korea; 20160411 - 20160415 2 April 2016 (2016-04-02), XP051080264, Retrieved from the Internet: URL:http://www.3gpp.org/ftp/tsg_ran/WG1_RL 1/TSGR1_84b/Docs/ [retrieved on 2016-04-02]

- HUAWEI ET AL: "On UL grants skipping", 3GPP DRAFT; R2-163005 ON UL GRANTS SKIPPING, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. RAN WG2, no. Dubrovnik, Croatia; 20160411 - 20160415 15 April 2016 (2016-04-15), XP051096038, Retrieved from the Internet: URL:http://www.3gpp.org/ftp/tsg_ran/WG2_RL 2/TSGR2_93bis/Docs/ [retrieved on 2016-04-15]

- HUAWEI ET AL.: 'Short TTI for UL Transmissions' 3GPP TSG RAN WG1 MEETING #84BIS, R1-162115 15 April 2016, XP051079962

## Description

## CROSS-REFERENCE TO RELATED APPLICATION

This application is based on and claims priority to Chinese Patent Application No. 201610323351.5, filed on May 13, 2016.

## TECHNICAL FIELD

The disclosure relates to wireless communications technologies, and in particular, to a transmission method and apparatus, a transmission system, and a storage medium.

## BACKGROUND

With the development of mobile communications technologies, a 5th-generation mobile communications technology (5G) will support a higher rate (Gbps), massive links (1M/Km$^2$), an ultra-low delay (1 ms), higher reliability, hundredfold energy efficiency improvement, and the like, to support a change in demand for new data traffic. The ultra-low delay, as a key index of the 5G technology, directly affects the development of delay-limited services such as the Internet of Vehicles, industrial automation, remote control, and smart grids.

Enhanced Semi-Persistent Scheduling (SPS) is an important research direction to reduce an uplink delay. Compared with an existing SPS technology, a shorter transmission cycle is introduced in enhanced SPS, for example, one Transmission Time Interval (TTI), so that an uplink delay of a User Equipment (UE) is greatly reduced. Further, when the UE has no data, the UE is allowed not to transmit any content, thereby reducing power consumption and inter-cell interferences.

However, as a transmission cycle in enhanced SPS becomes shorter, a probability of collision occurring in retransmission and new transmission is increased. Therefore, how to instruct retransmission and new transmission is a problem to be resolved. In addition, according to the existing SPS technology, an empty packet is indicated by a media access control control element (MAC CE); however, if an Evolved NodeB (eNB) cannot decode an empty packet, the UE has to retransmit the empty packet. Optionally, if at this time, the UE happens to have new data to be transmitted, the transmission of the new data is delayed and a data transmission delay is increased. Therefore, how to identify an empty packet and a data packet is also a problem to be resolved. There is no effective solution to the foregoing two problems currently.

Document of INTEL CORPORATION: "Further aspects of UL grant skipping" (3GPP DRAFI; R2-162467 FURIHER ASPECTS OF UL GRANI sKrpprNG, 3RD GENERATTON PARTNERSHTP PROJECT (3GPP), MOBILE COMPETENCE CENTRE ; 650, ROUIE DES LUCIOLES ; F-06921 SOPHIA-ANIIPOLIS CEDEX ; FRANCE vol. RAN WG2, no. Dubrovnik, Croatia; 20160411 - 20160415, 2 April 2016 (2016-04-02), XP051082424) discloses a transmission method, wherein UL grant skipping is used to reduce interference and UE power consumption. This document discloses that DMRS Cyclic Shift detection may be used by eNB to figure out whether the UL grant is skipped or UL transmission failed, however it faces scalability issues (Observation 7).

## SUMMARY

Embodiments of the disclosure is intended to provide a transmission method and a transmission device to resolve a problem of a high probability of collision in retransmission and new transmission and/or a problem of a large transmission delay. The invention is defined in the appended claims.

Technical solutions of the disclosure are implemented as follows:
According to a first aspect, transmission method is disclosed, where the method includes:

   obtaining, by a transmission device, scheduling grant information, where the scheduling grant information is used to schedule the transmission device to perform transmission in at least one Transmission Time Interval (TTI); and
   transmitting, by the transmission device, a target signal in the at least one Transmission Time Interval (TTI) according to a type of to-be-transmitted data and a preset transmission policy.

According to a second aspect, a transmission method is disclosed, where the method includes:

   receiving, by a receiving device, a target signal transmitted by a transmission device according to scheduling grant information; and
   identifying, by the receiving device, a type of the target signal according to a receiving mode of the target signal.

According to a third aspect, a transmission device is disclosed, where the transmission device includes an obtaining module and a transmission module; the obtaining module is arranged to obtain scheduling grant information, where the scheduling grant information is used to schedule the transmission module to perform transmission in at least one Transmission Time Interval (TTI); and
the transmission module is arranged to transmit a target signal in the at least one Transmission Time Interval (TTI) according to a type of to-be-transmitted data and a preset transmission policy.

According to fourth aspect, a receiving device is disclosed, where the receiving device includes a receiving module and an identification module, where

the receiving module is arranged to receive a target signal transmitted by a transmission device according to scheduling grant information; and

the identification module is arranged to identify a type of the target signal according to a receiving mode of the target signal.

According to a fifth aspect, a transmission system is disclosed, where the system includes a transmission device and a receiving device;

the transmission device is arranged to obtain scheduling grant information, and

transmit a target signal in at least one Transmission Time Interval (TTI) in the scheduling grant information according to a type of to-be-transmitted data and a preset transmission policy; and

the receiving device arranged to receive a target signal transmitted by the transmission device, and identify a type of the target signal according to a receiving mode of the target signal.

According to a sixth aspect, a communications device is disclosed, including:

a memory, arranged to store a computer program;
a communications interface, arranged to perform information transmission with another device; and
a processor, connected to both the memory and the communications interface, and arranged to implement, by executing the computer program, the transmission method provided in any one or more of the foregoing technical solutions.

According to a seventh aspect, a computer storage medium that is arranged to store a computer program is disclosed, where after being executed by a processor, the computer program can implement the transmission method provided in any one or more of the foregoing technical solutions.

The aspects of the disclosure provide a transmission method and apparatus, a transmission system, and a computer storage medium. A target signal is transmitted according to a type of to-be-transmitted data by using a preset transmission policy; and when the type of the to-be-transmitted data is to-be-newly-transmitted data in new transmission or to-be-retransmitted data in retransmission, different transmission modes may be used according to the preset transmission policy, so as to reduce a probability of collision in new transmission and retransmission. When the type of to-be-transmitted data is an empty packet or a non-empty packet, different transmission modes may also be used according to the preset transmission policy. Therefore, obviously, the technical solutions provided in the aspects of the disclosure can be used to resolve the problems of a high probability of collision and a large transmission delay in SPS; and when a transmission cycle is shortened in enhanced SPS, there is a low probability of collision in retransmission and new transmission, and data packet types can be effectively distinguished.

## BRIEF DESCRIPTION OF THE DRAWINGS

FIG. 1 is a schematic flowchart of a transmission method according to an embodiment of the disclosure;

FIG. 2 is a schematic flowchart of another transmission method according to an embodiment of the disclosure;

FIG. 3 is a schematic structural diagram of a transmission device according to an embodiment of the disclosure;

FIG. 4 is a schematic structural diagram of a receiving device according to an embodiment of the disclosure; and

FIG. 5 is a schematic structural diagram of a transmission system according to an embodiment of the disclosure.

## DETAILED DESCRIPTION

The following clearly and completely describes the technical solutions in the embodiments of the disclosure with reference to the accompanying drawings in the embodiments of the disclosure. It should be understood that the preferred embodiments described herein are merely used to explain and interpret the disclosure, rather than to limit the disclosure.

In this embodiment of the disclosure, different transmission modes are set for different types of data packets, so that an eNB can determine types of data packets according to different transmission modes of the data packets, for example, whether a data packet is an empty packet or a packet with data, or whether a data packet is a to-be-newly-transmitted data packet or a to-be-retransmitted data packet. In this case, when a transmission cycle is shortened in enhanced SPS, a probability of collision in retransmission and new transmission can be reduced and data packet types can be effectively distinguished.

Based on the foregoing basic idea, the following embodiments are proposed.

### Embodiment One

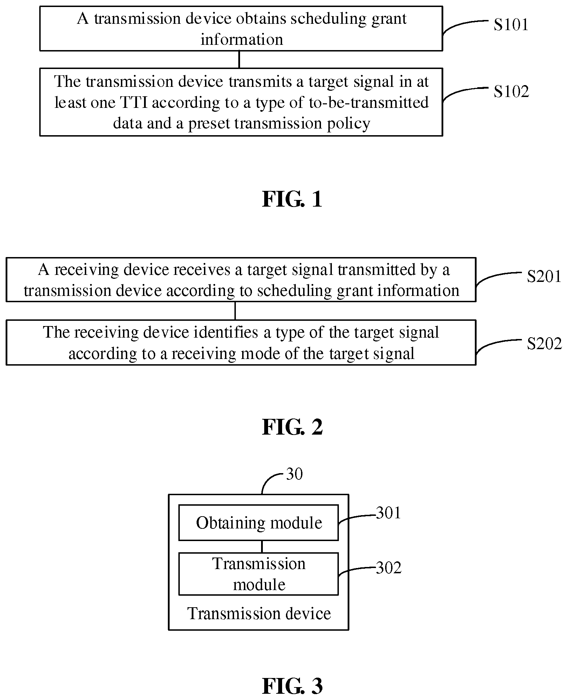

Referring to FIG. 1, FIG. 1 shows a transmission method according to this embodiment of the disclosure. The method may be applied to a transmission device side, and the method may include the following steps.

In S101, a transmission device obtains scheduling grant information.

The scheduling grant information is used to schedule the transmission device to perform transmission in at least one Transmission Time Interval (TTI).

In S102, the transmission device transmits a target signal in at least one TTI according to a type of to-be-transmitted data and a preset transmission policy.

It should be noted that, the target signal may be a packet with data or an empty packet, or no data may be transmitted. Alternatively, the target signal may be a to-be-newly-transmitted data packet or a to-be-retransmitted data packet. This is not repeated in this embodiment.

In this embodiment, the transmission device may be a User Equipment (UE) or may be an Evolved NodeB (eNB). When the transmission device is a UE, the transmission device may obtain scheduling grant information by receiving the scheduling grant information transmitted by the eNB. When the transmission device is an eNB, the transmission device may obtain scheduling grant information by setting and generating the scheduling grant information at the eNB itself. In order to clearly describe the technical solution of this embodiment of the disclosure, in subsequent embodiments, it is assumed that each transmission device is a UE, and each receiving device is an eNB. The skilled in the art can understand that he/she may use subsequent technical solutions in a scenario in which the transmission device is an eNB and the receiving device is UE, and details are not repeated in this embodiment of the disclosure.

In the technical solution shown in FIG. 1, it should be noted that, in step S102, the transmission device transmits target signals according to types of to-be-transmitted data and different transmission policies, so that correspondingly, a receiving device can determine the types of the target signals in a receiving process according to different receiving modes of the target signals. In this case, when a transmission cycle is shortened in enhanced SPS, a probability of collision in retransmission and new transmission can be reduced and whether a data packet type is an empty packet or a packet with data can be effectively distinguished.

Optionally, the operation of transmitting a target signal in the at least one Transmission Time Interval (TTI) includes transmitting the target signal in the at least one Transmission Time Interval (TTI) according to a preset specified cycle.

For example, when the to-be-transmitted data is an empty packet or a packet with data, the operation that the transmission device transmits a target signal in the at least one TTI according to a type of to-be-transmitted data and a preset transmission policy may include the following.

When the to-be-transmitted data is a non-empty packet, the transmission device performs transmission on a resource indicated by the scheduling grant information, using a preset first specified reference signal.

When the to-be-transmitted data is an empty packet, the transmission device performs transmission on the resource indicated by the scheduling grant information, using a reference signal different from the first specified reference signal, and/or performs transmission on a transmission resource different from the resource indicated by the scheduling grant information.

In the example, it should be noted that, in all embodiments of the disclosure, the reference signal may preferably be Demodulation Reference Information (DMRS); a Modulation Coding Scheme (MCS) or a TBS of the empty packet is preset; and when the transmission device performs transmission on a transmission resource different from the resource indicated by the scheduling grant information, at least one of the following is included: a frequency domain resource for transmitting the empty packet is a subset of a frequency domain resource indicated by the grant information; and/or the symbol(s) for transmitting the empty packet is a subset of symbols indicated by the grant information.

The operation that the transmission device performs transmission on the transmission resource different from the resource indicated by the scheduling grant information includes at least one of the following: the transmission device transmits the empty packet on a frequency domain resource which is a part of a frequency domain resource indicated by the scheduling grant information, or the transmission device transmits the empty packet in one or more symbols which are some of symbols indicated by the scheduling grant information.

In this embodiment, S102 may include: for different types of to-be-transmitted data, the transmission device sends target signals in a TTI indicated by the scheduling grant information, using different transmission parameters. The target signal herein is a wireless signal generated when the to-be-transmitted data is carried in a specific carrier.

The different transmission parameters may include different transmit frequencies and different transmission periods within one TTI, where the transmission period herein may include a transmission symbol and/or a transmission subframe.

For example, the method further includes the following.

When the transmission device has no data packet to transmit, the transmission device transmits a reference signal in some or all of symbols in the at least one TTI as indicated in the scheduling grant information; or the transmission device transmits a preset specified signal.

In the example, it should be noted that, the specified signal may include a Physical Uplink Control Channel (PUCCH). As can be understood, a resource of the PUCCH may be preset or may be configured by the eNB. This is not repeated in this embodiment.

For example, the operation of transmitting a target signal in the at least one Transmission Time Interval (TTI) according to a preset transmission policy may include the following.

The specified information is added to the to-be-transmitted data packet according to specified information corresponding to the to-be-transmitted data, where the specified information includes one of a Redundancy Version (RV) of the to-be-transmitted data and indication information that is used to indicate that the to-be-transmitted data is a to-be-newly-transmitted data packet or a to-be-retransmitted data packet.

Alternatively, when the to-be-transmitted data is a to-be-newly-transmitted data packet, the transmission device performs transmission on a resource indicated by the scheduling grant information, using a preset second specified reference signal; and when the to-be-transmitted data is a to-be-retransmitted data packet, the transmission device performs transmission on the resource indicated by the scheduling grant information, using a reference signal different from the second specified reference signal.

Alternatively, when the RV of the to-be-transmitted data is n, the transmission device performs transmission on a resource indicated by the scheduling grant information, using a preset third specified reference signal; when the RV of the to-be-transmitted data is m, the transmission device performs transmission on the resource indicated by the scheduling grant information, using a reference signal different from the third specified reference signal, where n and m belong to a set {0,1,2,3}, and n is not equal to m. In this manner, there is a correspondence between the RV and the reference signal; and during reference-signal transmission, the transmission device selects a reference signal corresponding to a current RV, and transmits the selected reference signal.

Alternatively, when the to-be-transmitted data is a to-be-newly-transmitted data packet, the transmission device scrambles the to-be-transmitted data by using a preset first specified Cell Radio Network Temporary Identifier (C-RNTI); and when the to-be-transmitted data is a to-be-retransmitted data packet, the transmission device scrambles the data packet by using a C-RNTI different from the first specified C-RNTI.

Alternatively, when a RV of the to-be-transmitted data is n, the transmission device scrambles the to-be-transmitted data by using a preset second specified Cell Radio Network Temporary Identifier (C-RNTI); and when the RV of the to-be-transmitted data is m, the transmission device scrambles the data packet by using a C-RNTI different from the second specified C-RNTI, where n and m belong to a set {0,1,2,3}, and n is not equal to m.

In the example, it should be noted that, a specific implementation of scrambling the data packet may include scrambling the to-be-transmitted data or a Cyclic Redundancy Check (CRC) of the to-be-transmitted data.

For example, when a transmission time of a to-be-newly-transmitted data packet and a transmission time of a to-be-retransmitted data packet are corresponding to a same TTI, the operation that the transmission device transmits a target signal in the at least one Transmission Time Interval (TTI) according to a type of to-be-transmitted data and a preset transmission policy may include the following.

The transmission device transmits the to-be-newly-transmitted data packet on an allocated resource corresponding to the scheduling grant information, for example, an SPS allocated resource, and transmits the to-be-retransmitted data packet on a resource corresponding to the to-be-retransmitted data packet.

Alternatively, the transmission device transmits the to-be-newly-transmitted data packet and/or the to-be-retransmitted data packet according to a preset priority.

In the example, it should be noted that, the operation that the transmission device transmits the to-be-newly-transmitted data packet and/or the to-be-retransmitted data packet according to a preset priority may include that, the transmission device preferentially transmits the to-be-retransmitted data packet, and skips or delays transmission of the to-be-newly-transmitted data packet.

For example, when a transmission time of a to-be-newly-transmitted data packet and a transmission time of a to-be-retransmitted data packet are corresponding to a same TTI, and a first to-be-transmitted data packet corresponding to the to-be-retransmitted data packet is an empty packet or a DTX packet, the operation that the transmission device transmits a target signal in the at least one Transmission Time Interval (TTI) according to a type of to-be-transmitted data and a preset transmission policy may include that, the transmission device transmits the to-be-newly-transmitted data packet, and skips transmission of the to-be-retransmitted data packet.

In the example, it should be noted that, different reference signals may include at least one of the following: reference signals occupying different symbols; reference signals occupying different subcarriers; or reference signals whose sequences are different.

The reference signal different from the second specified reference signal includes at least one of the following:

a reference signal occupying a symbol different from that occupied by the second specified reference signal;
a reference signal occupying a subcarrier different from that occupied by the second specified reference signal;
a reference signal whose sequence is different from that of the second specified reference signal; or
a reference signal formed by using a cyclic shift mode different from that used for the second specified reference signal.

For example, the reference signal different from the second specified reference signal includes at least one of the following:

a reference signal occupying a symbol different from that occupied by the second specified reference signal;
a reference signal occupying a subcarrier different from that occupied by the second specified reference signal;
a reference signal whose sequence is different from that of the second specified reference signal; or a reference signal formed by using cyclic shift different from that used for the second specified reference signal.

According to the transmission method in this embodiment, the transmission device transmits data packets according to types of the data packets and different transmission policies, so that correspondingly, the receiving device can determine the types of the data packets according to different receiving modes of the data packets. In this case, when a transmission cycle is shortened in enhanced SPS, a probability of collision in retransmission and new transmission can be reduced and it can be effectively distinguished whether a data packet type is an empty packet or a packet with data.

**Embodiment Two**

Based on a technical idea the same as that in the foregoing embodiment, referring to FIG. 2, FIG. 2 shows a transmission method according to this embodiment of the disclosure. The method may be applied to a receiving device side, and the method may include the following steps.

In S201, a receiving device receives a target signal transmitted by a transmission device according to scheduling grant information.

In S202, the receiving device identifies a type of the target signal according to a receiving mode of the target signal.

In this embodiment, the receiving device may be a User Equipment (UE) or may be an Evolved NodeB (eNB). Corresponding to specific description of the foregoing embodiment, in this embodiment, it is assumed that each receiving device is an eNB, and each transmission device is a UE. As can be understood, a person skilled in the art can use subsequent technical solutions in a scenario in which a receiving device is a UE and a transmission device is an eNB, and details are not repeated in this embodiment of the disclosure.

In the technical solution shown in FIG. 2, it should be noted that, in the foregoing embodiment, if a manner in which the UE transmits a data packet changes, a manner in which the eNB receives the data packet also changes, so that the eNB can determine types of data packets in a receiving process according to different receiving modes of the data packets. In this case, when a transmission cycle is shortened in enhanced SPS, a probability of collision in retransmission and new transmission can be reduced and it can be effectively distinguished whether a data packet type is an empty packet or a packet with data.

For example, the operation that the receiving device identifies a type of the target signal according to a receiving mode of the target signal may include the following.

When the target signal is transmitted, using a preset first specified reference signal, on a resource indicated by the scheduling grant information, the receiving device determines that the target signal is a non-empty data packet.

When the target signal is transmitted, using a reference signal different from the first specified reference signal, on a resource indicated by the scheduling grant information, and/or the target signal is transmitted on a transmission resource different from the resource indicated by the scheduling grant information, the receiving device determines that the target signal is an empty packet.

For example, the method further includes that, when the receiving device receives a reference signal in some or all of symbols in at least one TTI in the scheduling grant information, or when the receiving device receives a preset specified signal transmitted by the transmission device, the receiving device determines that the transmission device does not transmit a data packet.

For example, the operation that the receiving device identifies a type of the target signal according to a receiving mode of the target signal may include the following.

The receiving device determines, according to preset specified information in the received target signal, that the target signal is a newly-transmitted data packet or a retransmitted data packet, where the specified information includes one of a Redundancy Version (RV) of the data packet and indication information that is used to indicate whether the target signal is a newly-transmitted data packet or a retransmitted data packet.

Alternatively, when the target signal is transmitted, using a preset second specified reference signal, on a resource indicated by the scheduling grant information, the receiving device determines that the target signal is a newly-transmitted data packet; when the target signal is transmitted, using a reference signal different from the second specified reference signal, on the resource indicated by the scheduling grant information, the receiving device determines that the target signal is a retransmitted data packet.

Alternatively, when the target signal is transmitted, using a preset third specified reference signal, on a resource indicated by the scheduling grant information, the receiving device determines that a RV of the target signal is n; when the target signal is transmitted, using a reference signal different from the third specified reference signal, on the resource indicated by the scheduling grant information, the receiving device determines that the RV of the target signal is m, where n and m belong to a set {0,1,2,3}, and n is not equal to m; and there is a correspondence between a RV and a reference signal.

Alternatively, when the target signal is scrambled using a preset first specified Cell Radio Network Temporary Identifier (C-RNTI), the receiving device determines that the target signal is a newly-transmitted data packet; when the target signal is scrambled using a C-RNTI different from the first specified C-RNTI, the receiving device determines that the target signal is a retransmitted data packet.

Alternatively, when the target signal is scrambled using a preset second specified Cell Radio Network Temporary Identifier (C-RNTI), the receiving device determines that a RV of the target signal is n; when the target signal is scrambled using a C-RNTI different from the second specified C-RNTI, the receiving device determines that the RV of the target signal is m, where n and m belong to a set {0,1,2,3}, and n is not equal to m.

For example, when a transmission time of a newly-transmitted data packet and a transmission time of a retransmitted data packet are corresponding to a same TTI, the operation that the receiving device identifies a type of the target signal according to a receiving mode of the target signal may include the following.

The receiving device determines a target signal received on an allocated resource corresponding to the scheduling grant information, to be a newly-transmitted data packet, and determines a target signal received on a preset resource corresponding to the retransmitted data packet, to be a retransmitted data packet.

Alternatively, the receiving device determines, according to a preset priority, that the target signal is a newly-transmitted data packet or a retransmitted data packet.

Optionally, the operation that the receiving device determines, according to a preset priority, that the target signal is a newly-transmitted data packet or a retransmitted data packet may include the following.

The receiving device determines a data packet firstly received to be a retransmitted data packet.

For example, when a transmission time of a newly-transmitted data packet and a transmission time of a retransmitted data packet are corresponding to a same TTI, and a first transmitted data packet corresponding to the retransmitted data packet is an empty packet or a DTX packet, the operation that the receiving device identifies a type of the target signal according to a receiving mode of the target signal may include that, the receiving device determines the received target signal to be a newly-transmitted data packet.

According to the transmission method in this embodiment, the receiving device determines types of target signals in a receiving process according to different receiving modes of the target signals. In this case, when a transmission cycle is shortened in enhanced SPS, a probability of collision in retransmission and new transmission can be reduced and it can be effectively distinguished whether a data packet type is an empty packet or a data packet.

Based on a technical idea the same as that in the foregoing embodiment, the technical solution of the foregoing embodiment is described in this embodiment of the disclosure. In the following examples, it is assumed that each receiving device is an eNB and each transmission device is UE. The examples are as follows:

**Example 1**

This example is used to describe a specific method of transmitting an empty packet or a data packet by a UE. It should be noted that, when there is no data to be transmitted, that is, a buffer of the UE is empty, an empty packet is to be transmitted. The specific form of the empty packet is not specifically limited in this embodiment of the disclosure. In addition, uplink transmission is used as an example for description in this embodiment of the disclosure. As can be understood, the technical solution can also be used for uplink and/or downlink transmission.

Optionally, the UE may indicate an empty packet and a data packet according to different DMRSs, and specific manners may include but are not limited to the following several manners.

1. The UE indicates an empty packet or a data packet by using a location of a symbol occupied by a DMRS.

For example, the UE performs transmission on a resource allocated by an eNB, if a DMRS is transmitted in symbol #3 of each timeslot, it indicates that the UE transmits a data packet; if a DMRS is transmitted in symbol #4 of each timeslot, it indicates that the UE transmits an empty packet.

Correspondingly, the eNB can determine, by using a location of a symbol occupied by a DMRS transmitted by the UE, whether the UE transmits a data packet or an empty packet. This manner may be not limited to be used in an LTE scenario, for example, may also be used in a short TTI scenario, to be specific, in which a length of a TTI is less than 14 symbols.

2. The UE indicates an empty packet or a data packet by using a sequence of a DMRS.

For example, an eNB allocates two DMRS sequences, that is, a sequence #1 and a sequence #2, to the UE. The UE performs transmission on a resource allocated by the eNB, if a DMRS transmitted by the UE uses the sequence #1, it indicates that the UE transmits a data packet; if a DMRS transmitted by the UE uses the sequence #2, it indicates that the UE transmits an empty packet.

Correspondingly, the eNB can determine, by using a sequence of a DMRS transmitted by the UE, whether the UE transmits a data packet or an empty packet.

Whether a data packet is an empty packet may be determined based on two cyclic shift manners of a DMRS sequence allocated by a base station (for example, the eNB) to the UE; if a DMRS transmitted by the UE is formed in a first cyclic shift manner, it indicates that the UE transmits a non-empty packet; and if a DMRS transmitted by the UE is formed in a second cyclic shift manner, it indicates that the UE transmits an empty pack-

et.

3. The UE indicates an empty packet or a data packet by using a frequency domain resource occupied by a DMRS.

For example, when the UE performs transmission on a resource allocated by an eNB, if the DMRS occupies an odd-numbered subcarrier of a symbol of the DMRS, it indicates that the UE transmits a data packet; if the DMRS occupies an even-numbered subcarrier of a symbol of the DMRS, it indicates that the UE transmits an empty packet.
Correspondingly, the eNB may determine, by using a frequency domain location occupied by the DMRS transmitted by the UE, whether the UE transmits a data packet or an empty packet.
It should be noted that, an MCS of the empty packet is preset, or is indicated by the eNB, and may be different from an MCS indicated in current scheduling.
For example, the eNB indicates MCS=15 in the current scheduling, while MCS=0 is used for the empty packet, and a code rate is relatively low. In this manner, the eNB may demodulate the empty packet correctly, and reduce a probability of retransmitting an empty packet. During decoding, the eNB may attempt to perform decoding according to two MCSs.
Optionally, the UE may indicate an empty packet and a data packet according to different occupied resources. A specific manner may include but is not limited to the following manners.

1. The UE indicates an empty packet or a data packet according to an occupied frequency domain resource.

For example, if the UE performs transmission on a resource allocated by an eNB, it indicates that the UE transmits a data packet; if the UE performs transmission on a preset frequency domain resource, it indicates that the UE transmits an empty packet, where the preset frequency domain resource may be a part of the allocated frequency domain resource. For example, if the resource allocated by the eNB is a PRB #0 to a PRB #9, and when the empty packet is transmitted, the empty packet is transmitted on a half of the frequency domain resource, for example, a half of the frequency domain resource with lowest numbers, that is, the PRB #0 to the PRB # 4, or the empty packet is transmitted on an initial PRB, that is, the PRB #0.

2. The UE indicates an empty packet or a data packet according to an occupied time domain resource.

For example, if the UE performs transmission on a resource allocated by an eNB, it indicates that the UE transmits a data packet; if the UE performs transmission on a preset time domain resource, it indicates that the UE transmits an empty packet, where the preset time domain resource may be a part of the allocated time domain resources. For example, the eNB schedules the UE to perform transmission in a subframe #n, and if the UE transmits an empty packet, the empty packet is transmitted in a first timeslot of the subframe #n, or transmitted in a second timeslot of the subframe #n, or transmitted in a symbol such as a first symbol.

3. The UE indicates an empty packet or a data packet according to an occupied time-frequency resource.

For example, if the UE performs transmission on a resource allocated by an eNB, it indicates that the UE transmits a data packet; if the UE performs transmission on a preset time-frequency resource, it indicates that the UE transmits an empty packet, where the preset time-frequency resource may be a part of the allocated time-frequency resource. For example, the eNB schedules the UE to perform transmission on a PRB #0 to a PRB #9 in a subframe #n, and if the UE transmits an empty packet, the empty packet is transmitted on the PRB #0 to the PRB #9 in a first timeslot of the subframe #n.
It should be noted that, an MCS of the empty packet is preset, or is indicated by the eNB, and may be different from an MCS indicated in the current scheduling. For example, the eNB indicates MCS=15 in the current scheduling, while MCS=0 is used for the empty packet, and a code rate is relatively low. In this manner, the eNB may demodulate the empty packet correctly, and reduce a probability of retransmitting an empty packet. During decoding, the eNB may attempt to perform decoding according to two MCSs.
Optionally, the UE may indicate the empty packet and the data packet by using a combination of foregoing manners. A specific manner may include but is not limited to the following manners.

1. When an eNB sends an SPS uplink grant, for first transmission, the UE may perform transmission in the foregoing manner. In this way, the eNB may learn that the UE receives the SPS uplink grant.
2. If the UE transmits an empty packet or has no data to transmit in previous transmission, and an eNB feeds back a NACK and/or schedules retransmission, the UE may transmit the empty packet in the foregoing manner.
3. In SPS transmission, the UE may transmit a signal on an SPS resource in a specified TTI in a specified cycle, where the specified cycle is different from an SPS transmission cycle, for example, may be greater than or equal to the SPS transmission cycle. For example, the SPS cycle may be one TTI, and the signal transmission cycle may be ten TTIs. In a specific TTI, if the UE has data to transmit, the UE transmits a data packet in the foregoing manner; and if the UE has no data to transmit, the UE transmits an empty packet in the foregoing manner. The eNB may perform uplink channel measurement based on the signal.

## Example 2

This example is used to describe an implementation in which UE indicates whether the UE has data to transmit, and the implementation may include the following.

1. When receiving an uplink grant sent by an eNB, if the UE has data to transmit, the UE transmits a data packet, and if the UE has no data to transmit, the UE may transmit preset indication information to indicate that the UE has data to transmit at this time.

2. When the UE has no data to transmit, the UE may transmit only a DMRS, that is, transmits the DMRS at a location for transmitting the DMRS, and no signal is transmitted in other symbols.

For example, the UE transmits the DMRS only in a fourth symbol in two timeslots of a subframe, and no signal is transmitted in another symbol.

3. When the UE has no data to transmit, the UE may transmit the DMRS in some or all of the symbols.

For example, the UE transmits the DMRS in all of the symbols.

4. When the UE has no data to transmit, the UE transmits a specified signal, for example, a predefined signal.

5. An eNB allocates a PUCCH resource to the UE, and when the UE has no data to transmit, the UE transmits a signal on the resource. When the UE has data to transmit, the UE transmits the data on the resource allocated by the eNB, and does not transmit any signal on the PUCCH resource.

6. In SPS transmission, the UE may transmit a signal on an SPS resource in a specified TTI in a specified cycle, where the specified cycle is different from an SPS transmission cycle, for example, may be greater than or equal to the SPS transmission cycle. The eNB may perform uplink channel measurement based on the signal.

## Example 3

This example is used to describe a specific implementation method in which a UE, indicates whether a data packet transmitted by the UE is a to-be-newly-transmitted data packet or a to-be-retransmitted data packet, and may include the following:

1. The UE transmits at least one of following information on a Physical Uplink Shared Channel (PUSCH): indication information of a to-be-newly-transmitted data packet or a retransmitted data packet, or a Redundancy Version (RV).

For example, the indication information of the to-be-newly-transmitted data packet or the to-be-retransmitted data packet is one bit, and indication information of the RV is two bits that indicate redundant versions 0, 2, 3, and 1, respectively. For example, "0" is used to indicate retransmission, "1" is used to indicate new transmission; or the indication information is reversed to indicate whether a data packet to be transmitted by the UE is a to-be-newly-transmitted data packet or a to-be-retransmitted data packet. Optionally, at least one of the RV, or the indication information of the to-be-newly-transmitted data packet or the to-be-retransmitted data packet is coded independently. The at least one of the RV, or the indication information of the to-be-newly-transmitted data packet or the to-be-retransmitted data packet is cascaded with data, and is transmitted. Alternatively, the at least one of the RV, or the indication information of the to-be-newly-transmitted data packet or the to-be-retransmitted data packet is transmitted in a preset symbol, for example, transmitted in a first symbol, for example, starts mapping from the last row of an interleaver matrix upwards.

2. The UE uses different C-RNTIs for scrambling data, to indicate at least one of the following information: an RV, or indication information of a to-be-newly-transmitted data packet or a to-be-retransmitted data packet.

In the prior art, assuming that a bit transmitted on a code word q is $b^{(q)}(0),...,b^{(q)}(M_{bit}^{(q)}-1)$, and is scrambled by using a sequence $c^{(q)}(i)$, that is $\tilde{b}^{(q)}(i) = (b^{(q)}(i) + c^{(q)}(i))\bmod 2$, where $c^{(q)}(i)$ is initialized by using a C-RNTI of the UE, that is,

$$c_{init} = n_{RNTI} \cdot 2^{14} + q \cdot 2^{13} + \lfloor n_s/2 \rfloor \cdot 2^9 + N_{ID}^{cell}$$

Assuming that two C-RNTIs are allocated to the UE, that is, $n_{RNTI\_1}$ and $n_{RNTI\_2}$. When data is to be newly transmitted, $c^{(q)}(i)$ is initialized by using $n_{RNTI\_1}$, and when data is to be retransmitted, $c^{(q)}(i)$ is initialized by using $n_{RNTI\_2}$. Alternatively, four C-RNTIs are allocated to the UE, and used to indicate four RVs, respectively.

Optionally, a C-RNTI or an SPS-RNTI of the UE is used for scrambling data to indicate the foregoing information. For example, the C-RNTI of the UE is used to scramble to-be-newly-transmitted data, and the SPS-RNTI is used to scramble to-be-retransmitted data.

3. The UE uses different C-RNTIs for scrambling a CRC of data, to indicate at least one of the following information: an RV, or indication information of a to-be-newly-transmitted data packet or a to-be-retransmitted data packet.

In the prior art, a length of a CRC of data is 24 bits, and an XOR operation may be performed on different C-RNTIs and preset 16 bits of the CRC, for example, an XOR operation may be performed on the different C-RNTIs and the lowest 16 bits of the CRC . Alternatively, different C-RNTIs are used to initialize a generation sequence, and an XOR operation is performed on preset 24 bits of the generation sequence and the CRC in a manner similar to the manner 2, for example, the start 24 bits are used.

Optionally, a C-RNTI or an SPS-RNTI of the UE is used for scrambling the CRC of the data to indicate the foregoing information.

4. The UE uses a DMRS to indicate at least one of the following information: an RV, or indication information of a to-be-newly-transmitted data packet or a to-be-retransmitted data packet.

Similar to the example 1, at least one of a time domain location, a sequence, or a frequency domain location used by the DMRS is used for indication.

5. The UE uses a combination of the foregoing methods.

It should be noted that, the implementation method in this example is not limited to be applied to the SPS transmission, and may also be applied to another scenario.

**Example 4**

This example is used to describe that, in SPS transmission, if retransmission and new transmission of a UE occur in a same TTI, and a retransmission resource is different from a new-transmission resource, it should be noted that, for a processing manner used by the UE, the retransmission may be scheduled by an eNB, or the retransmission resource may be configured by an eNB, for example, notified through RRC signaling, or may be preset, for example, is a resource adjacent to a resource allocated through SPS. The manner used by the UE includes the following.

1. The UE transmits a to-be-retransmitted data packet and a to-be-newly-transmitted data packet simultaneously.

For example, if a resource allocated through SPS is PRB #0 to PRB # 9, and a resource allocated for retransmission is PRB #20 to PRB #29, the UE performs transmission both in the PRB #0 to the PRB #9 and the PRB #20 to the PRB #29. Optionally, to ensure a single-carrier characteristic of a signal transmitted by the UE, the eNB may configure the retransmission resource and the resource obtained through SPS to be continuous in a frequency domain, for example, the resource allocated through SPS is PRB #0 to PRB #9, and the resource allocated for retransmission is PRB #10 to PRB #19. Optionally, a quantity of the retransmission resource may be unequal to a quantity of the resource allocated through SPS, for example, the resource allocated through SPS is ten PRBs, and the retransmission resource is twenty PRBs.

2. The UE defines a transmission priority.

For example, the UE preferentially transmits a to-be-retransmitted data packet. No signal may be transmitted on the resource allocated through the SPS, that is, giving up transmission of a to-be-newly-transmitted data packet, or delaying transmission of the to-be-newly-transmitted data packet.

3. If the UE transmits an empty packet or has no data to transmit in previous transmission (having no data to transmit herein may be referred to as DTX), while the eNB feeds back a NACK and/or schedules retransmission, and if the to-be-retransmitted data packet and the data packet that is newly transmitted by the UE correspond to a same TTI, the UE transmits the to-be-newly-transmitted data packet on the resource allocated through the SPS, and transmits no signal on the transmission resource.

It should be noted that, the implementation method in this example is not limited to be applied to the SPS transmission, and may also be applied to another scenario.

**Embodiment Three**

Based on a technical idea the same as that in the foregoing embodiment, referring to FIG. 3, FIG. 3 shows a structure of a transmission device 30 according to this embodiment of the disclosure. The transmission device 30 may include an obtaining module 301 and a transmission module 302. The obtaining module 301 is arranged to obtain scheduling grant information, where the scheduling grant information is used to schedule the transmission module 302 to perform transmission in at least one Transmission Time Interval (TTI).

The transmission module 302 is arranged to transmit a target signal in the at least one Transmission Time Interval (TTI) according to a type of to-be-transmitted data and a preset transmission policy.

In the foregoing solution, the transmission module 302 is arranged to transmit, using a preset first specified reference signal, a non-empty data packet on a resource indicated by the scheduling grant information.

The transmission module 302 is further arranged to transmit, using a reference signal different from the first specified reference signal, an empty packet on the resource indicated by the scheduling grant information, and/or transmit an empty packet on a transmission resource different from the resource indicated by the scheduling grant information.

In the foregoing solution, the transmission module 302 is arranged to transmit a reference signal in some or all of symbols in the at least one TTI in the scheduling grant information; or transmit a preset specified signal.

In the foregoing solution, the transmission module 302 is arranged to add, according to specified information corresponding to the to-be-transmitted data, the specified information to a to-be-transmitted data packet, where the specified information includes at least one of a Redundancy Version (RV) of the to-be-transmitted data, or indication information that is used to indicate whether the to-be-transmitted data is a to-be-newly-transmitted data packet or a to-be-retransmitted data packet.

Or, the transmission module 302 is arranged to transmit, using a preset second specified reference signal, a to-be-newly-transmitted data packet on a resource indicated by the scheduling grant information; and transmit, using a reference signal different from the second specified reference signal, a to-be-retransmitted data packet on the resource indicated by the scheduling grant information.

Or, the transmission module 302 is arranged to when a RV of the to-be-transmitted data is n, perform, using a preset third specified reference signal, transmission on a resource indicated by the scheduling grant information; and when the RV of the to-be-transmitted data is m, perform, using a reference signal different from the third specified reference signal, transmission on the resource indicated by the scheduling grant information, where n and m belong to a set {0,1,2,3}, and n is not equal to m; in short, the sent signal is corresponding to the RV herein, and a different RV is corresponding to a different reference signal.

Or, the transmission module 302 is arranged to when the to-be-transmitted data is a to-be-newly-transmitted data packet, scramble the to-be-transmitted data by using a preset first specified Cell Radio Network Temporary Identifier (C-RNTI); and when the to-be-transmitted data is a to-be-retransmitted data packet, scramble the data packet by using a C-RNTI different from the first specified C-RNTI.

Or, the transmission module 302 is arranged to when a RV of the to-be-transmitted data is n, scramble the to-be-transmitted data by using a preset second specified Cell Radio Network Temporary Identifier (C-RNTI); and when the RV of the to-be-transmitted data is m, scramble the to-be-transmitted data by using a C-RNTI different from the second specified C-RNTI, where n and m belong to a set {0,1,2,3}, and n is not equal to m.

In the foregoing solution, the transmission module 302 is arranged to transmit a to-be-newly-transmitted data packet on an allocated resource corresponding to the scheduling grant information, and transmit a to-be-retransmitted data packet on a resource corresponding to the to-be-retransmitted data packet.

Or, the transmission module 302 is arranged to transmit the to-be-newly-transmitted data packet and the to-be-retransmitted data packet according to a preset priority.

In the foregoing solution, the transmission module 302 is arranged to preferentially transmit the to-be-retransmitted data packet, and skip or delay transmission of the to-be-newly-transmitted data packet.

In the foregoing solution, the transmission module 302 is arranged to transmit the to-be-newly-transmitted data packet, and skip transmission of the to-be-retransmitted data packet.

**Embodiment Four**

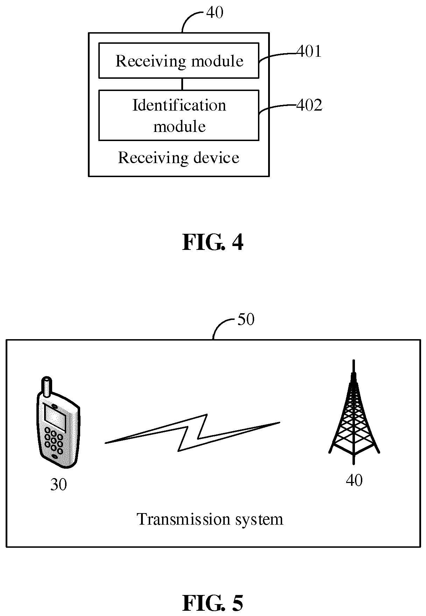

Based on a technical idea the same as that in the foregoing embodiment, referring to FIG. 4, FIG. 4 shows a receiving device 40 according to this embodiment, where the receiving device 40 may include a receiving module 401 and an identification module 402;
the receiving module 401 is arranged to receive a target signal transmitted by a transmission device according to scheduling grant information; and
the identification module 402 is arranged to identify a type of the target signal according to a receiving mode of the data packet.

In the foregoing solution, the identification module 402 is arranged to: when the target signal is transmitted, by using a preset first specified demodulation reference signal, on a resource indicated by the scheduling grant information, determine that the target signal is a non-empty data packet; and
when the target signal is transmitted, by using a reference signal different from the first specified reference signal, on the resource indicated by the scheduling grant information, and/or the target signal is transmitted on a transmission resource different from the resource indicated by the scheduling grant information, determine that the target signal is an empty packet.

In the foregoing solution, the identification module 402 is further arranged to: when a reference signal is received in some or all of symbols in at least one TTI as indicated in the scheduling grant information; or a preset specified signal transmitted by the UE is received, determine that the UE has not transmit any data packet.

In the foregoing solution, the identification module 402 is arranged to determine, according to preset specified information in the received target signal, that the target signal is a newly-transmitted data packet or a retransmitted data packet, where the specified information includes at least one of a Redundancy Version (RV) of the data packet, or indication information that is used to indicate whether the target signal is a newly-transmitted data packet or a retransmitted data packet.

Or, the identification module 402 is arranged to, when the data packet is transmitted, using a preset second specified reference signal, on a resource indicated by the scheduling grant information, determine that the target signal is a newly-transmitted data packet; and when the target signal is transmitted, using a reference signal different from the second specified reference signal, on the resource indicated by the scheduling grant information, determine that the target signal is a retransmitted data packet.

Or, the identification module 402 is arranged to, when the target signal is transmitted, using a preset third specified reference signal, on a resource indicated by the scheduling grant information, determine that a RV of the target signal is n; and when the target signal is transmitted, using a reference signal different from the third specified reference signal, on the resource indicated by the scheduling grant information, determine that the RV of the target signal is m, where n and m belong to a set {0,1,2,3}, and n is not equal to m.

Or, the identification module 402 is arranged to, when the target signal is scrambled using a preset first specified Cell Radio Network Temporary Identifier (C-RNTI), determine that the target signal is a newly-transmitted data packet; and when the target signal is scrambled using a C-RNTI different from the first specified C-RNTI, determine that the target signal is a retransmitted data packet; or

Or, the identification module 402 is arranged to, when the target signal is scrambled using a preset second specified Cell Radio Network Temporary Identifier (C-RNTI), determine that a RV of the target signal is n; and when the target signal is scrambled using a C-RNTI different from the second specified C-RNTI, determine that the RV of the target signal is m, where n and m belong to a set {0,1,2,3}, and n is not equal to m.

In the foregoing solution, the identification module 402 is arranged to determine a target signal received on an allocated resource corresponding to the scheduling grant information, to be a newly-transmitted data packet, and determine a target signal received on a resource corresponding to a retransmitted data packet, to be a retransmitted data packet.

Or, the identification module 402 is arranged to, determine, according to a preset priority, that the target signal is a newly-transmitted data packet or a retransmitted data packet.

In the foregoing solution, the identification module 402 is arranged to determine a data packet first received to be a retransmitted data packet.

In the foregoing solution, the identification module 402 is arranged to determine a received data packet to be a newly-transmitted data packet.

## Embodiment Five

Based on a technical idea the same as that in the foregoing embodiments, as shown in FIG. 5, FIG. 5 shows a transmission system 50 according to an embodiment of the disclosure, where the system 50 includes a transmission device 30 and a receiving device 40.

The transmission device 30 is arranged to obtain scheduling grant information, where the scheduling grant information is used to schedule the transmission device 30 to perform transmission in at least one Transmission Time Interval (TTI), and transmit a target signal in the at least one Transmission Time Interval (TTI) according to a type of to-be-transmitted data and a preset transmission policy.

The receiving device 40 is arranged to receive a target signal transmitted by the transmission device 30, and identify a type of the target signal according to a receiving mode of the target signal.

This embodiment of the disclosure provides a communications device. The device includes a memory, arranged to store a computer program; a communications interface, arranged to perform information transmission with another device; and a processor, connected to both the memory and the communications interface, and arranged to implement, by executing the computer program, the transmission method provided in any one or more of the foregoing technical solutions, for example, the transmission methods provided in Embodiment 1 and the examples.

The memory may include various storage mediums, for example, include a non-transitory storage medium storing the computer program.

The communications interface may be corresponding to a radio interface, and may be arranged to perform information transmission by sending a wireless signal.

The processor may include an application processor (AP), a central processing unit (CPU), and a digital signal processor (DSP), or a field programmable gate array (FPGA).

The processor may be connected to the memory and the communications interface by using a bus, for example, the processor is connected to the memory and the communications interface by using an Integrated Circuit (IIC) bus.

This embodiment of the disclosure further provides a computer storage medium that is arranged to store a computer program, where after being executed by a processor, the computer program can implement a transmission method, for example, the transmission methods provided in Embodiment 1 and the examples.

The computer storage medium provided in this embodiment of the disclosure may be various types of storage mediums such as a random storage medium, a read-only storage medium, an optical disc, a removable hard disk, a USB flash drive, or a magnetic tape, and may optionally include but not limited to various non-transitory storage mediums such as a disk memory and an optical memory.

## INDUSTRIAL APPLICABILITY

According to the technical solutions provided in the embodiments of the disclosure, a TTI for transmitting a target signal may be determined by sending scheduling grant information, and then target information is sent in the corresponding TTI according to a type of to-be-transmitted data and a preset transmission policy. In this way, differentiated transmission between to-be-newly-transmitted data in new transmission and to-be-retransmitted data in retransmission and differentiated transmission between an empty packet and a non-empty packet can be implemented, so as to resolve problems of a high probability of collision and a large transmission delay. In this way, the technical solutions are advantageous for industrial implementation. In addition, the transmission method provided in the embodiments of the disclosure can be implemented by rewriting and using a computer program in a corresponding communications device. Therefore, the technical solutions have characteristics of strong industrial practicality and easy industrial popularization.

## Claims

1. A transmission method, wherein the method comprises:

    obtaining (S101), by a transmission device, scheduling grant information, wherein the scheduling grant information is used to schedule the transmission device to perform transmission in at least one Transmission Time Interval, TTI; and
    transmitting (S102), by the transmission device, a target signal in the at least one TTI according to a type of to-be-transmitted data and a preset transmission policy, wherein,
    the transmitting, by the transmission device, a target signal in the at least one TTI according to a type of to-be-transmitted data and a preset transmission policy comprises:

        when the to-be-transmitted data is a non-empty data packet, performing, by the transmission device using a first specified reference signal, transmission on a resource indicated by the scheduling grant information; and
        when the to-be-transmitted data is an empty packet, performing at least one of the following:

            performing, by the transmission device using a reference signal different from the first specified reference signal, transmission on the resource indicated by the scheduling grant information, or performing, by the transmission device, transmission on a transmission resource different from the resource indicated by the scheduling grant information;

        wherein the reference signal different from the first specified reference signal comprises at least one of the following:

            a reference signal occupying a symbol different from that occupied by the first specified reference signal;
            a reference signal occupying a subcarrier different from that occupied by the first specified reference signal;

a reference signal whose sequence is different from that of the first specified reference signal; or
a reference signal formed by using a cyclic shift mode different from that used for the first specified reference signal.

2. The method of claim 1, wherein performing, by the transmission device, transmission on the transmission resource different from the resource indicated by the scheduling grant information comprises at least one of the following:

    transmitting the empty packet on a frequency domain resource which is a part of a frequency domain resource indicated by the scheduling grant information; or
    transmitting the empty packet in one or more symbols which are some of symbols indicated by the scheduling grant information.

3. The method of claim 1, wherein the method further comprises: when the transmission device has no data to transmit,

    transmitting, by the transmission device, a reference signal in some or all of symbols in the at least one TTI indicated by the scheduling grant information; or
    transmitting, by the transmission device, a specified signal.

4. The method of claim 3, wherein the specified signal is a Physical Uplink Control Channel, PUCCH, wherein a resource corresponding to the PUCCH is preset and/or configured by an Evolved NodeB, eNB

5. The method of claim 1, wherein transmitting, by the transmission device, a target signal in the at least one TTI according to the type of to-be-transmitted data and the preset transmission policy comprises:

    adding specified information corresponding to the to-be-transmitted data to the to-be-transmitted data packet, wherein the specified information comprises one of a Redundancy Version, RV, of the data packet and indication information that is used to indicate that the data packet is a to-be-newly-transmitted data packet or a to-be-retransmitted data packet; or
    when the to-be-transmitted data is a to-be-newly-transmitted data packet, performing, by the transmission device using a second specified reference signal, transmission on a resource indicated by the scheduling grant information;
    when the to-be-transmitted data is a to-be-retransmitted data packet, performing, by the transmission device using a reference signal different from the second specified reference signal, transmission on the resource indicated by the scheduling grant information; or

when a RV of the to-be-transmitted data is n, performing, by the transmission device using a third specified reference signal, transmission on a resource indicated by the scheduling grant information; when the RV of the to-be-transmitted data is m, performing, by the transmission device using a reference signal different from the third specified reference signal, transmission on the resource indicated by the scheduling grant information, wherein n and m belong to a set {0,1,2,3}, and n is not equal to m; or

when the to-be-transmitted data is a to-be-newly-transmitted data packet, scrambling, by the transmission device, the to-be-transmitted data using a preset first specified Cell Radio Network Temporary Identifier, C-RNTI; when the to-be-transmitted data is a to-be-retransmitted data packet, scrambling, by the transmission device, the target signal using a C-RNTI different from the first specified C-RNTI; or

when the RV of the to-be-transmitted data is n, scrambling, by the transmission device, the to-be-transmitted data using a preset second specified C-RNTI; when the RV of the to-be-transmitted data is m, scrambling, by the transmission device, the target signal by using a C-RNTI different from the second specified C-RNTI, wherein n and m belong to a set {0,1,2,3}, and n is not equal to m.

6. The method of claim 5, wherein scrambling the to-be-transmitted data comprises scrambling the to-be-transmitted data or scrambling a Cyclic Redundancy Check, CRC, of the to-be-transmitted data.

7. The method of claims 5 and 6, wherein the reference signal different from the second specified reference signal comprises at least one of the following:

a reference signal occupying a symbol different from that occupied by the second specified reference signal;
a reference signal occupying a subcarrier different from that occupied by the second specified reference signal;
a reference signal whose sequence is different from that of the second specified reference signal; or
a reference signal formed by using a cyclic shift mode different from that used for the second specified reference signal.

8. The method of claim 1, wherein when a transmission time of a to-be-newly-transmitted data packet and a transmission time of a to-be-retransmitted data packet are corresponding to a same TTI, transmitting, by the transmission device, the target signal in the at least one TTI according to the type of to-be-transmitted data and the preset transmission policy comprises:

transmitting, by the transmission device, the to-be-newly-transmitted data packet on an allocated resource corresponding to the scheduling grant information, and transmitting the to-be-retransmitted data packet on a resource corresponding to the to-be-retransmitted data packet; or
transmitting, by the transmission device, at least one of the to-be-newly-transmitted data packet or the to-be-retransmitted data packet according to a preset priority.

9. The method of claim 8, wherein the transmitting, by the transmission device, at least one of the to-be-newly-transmitted data packet or the to-be-retransmitted data packet according to the preset priority comprises:
preferentially transmitting, by the transmission device, the to-be-retransmitted data packet, and skipping or delaying transmission of the to-be-newly-transmitted data packet.

10. The method of claim 1, wherein when a transmission time of a to-be-newly-transmitted data packet and a transmission time of a to-be-retransmitted data packet are corresponding to a same TTI, and a first transmitted data packet corresponding to the to-be-retransmitted data packet is an empty packet or a Discontinuous transmission (DTX) packet, transmitting, by the transmission device, the target signal in the at least one TTI according to the type of to-be-transmitted data and the preset transmission policy comprises:
transmitting, by the transmission device, the to-be-newly-transmitted data packet, and skipping, by the transmission device, transmission of the to-be-retransmitted data packet.

11. The method of claim 1, wherein transmitting the target signal in the at least one TTI comprises:
transmitting the target signal in the at least one TTI according to a specified cycle.

12. The method of claim 1, wherein at least one of a Modulation Coding Scheme, MCS, or a Transmission Block Size, TBS, of the empty packet is preset.

13. A transmission device, **characterized by** comprising:

a processor; and

a memory storing instructions, which, when executed by the processor, cause the processor to execute the method of any of claims 1 to 12.

## Patentansprüche

1. Übertragungsverfahren, wobei das Verfahren umfasst:

ein Erhalten (S101) von Bewilligungsinformationen einer zeitlichen Planung durch eine Übertragungsvorrichtung, wobei die Bewilligungsinformationen der zeitlichen Planung verwendet werden, um das Übertragungsgerät zeitlich so zu planen, dass eine Übertragung in mindestens einem Übertragungszeitintervall, TTI, durchgeführt wird; und

ein Senden (S102) durch die Übertragungsvorrichtung von einem Zielsignal in dem mindestens einen TTI gemäß einer Art von zu übertragenden Daten und einer voreingestellten Übertragungsrichtlinie, wobei

das Senden des Zielsignals durch das Übertragungsgerät in dem mindestens einen TTI gemäß einer Art von zu übertragenden Daten und einer voreingestellten Übertragungsrichtlinie umfasst,

dass, wenn es sich bei den zu übertragenden Daten um ein nicht leeres Datenpaket handelt, die Übertragungsvorrichtung mittels eines ersten spezifizierten Referenzsignals eine Übertragung auf einer Ressource durchführt, die durch die Bewilligungsinformationen der zeitlichen Planung angegeben worden ist; und

dass, wenn es sich bei den zu übertragenden Daten um ein leeres Paket handelt, mindestens eine der folgenden Aktionen ausgeführt wird:

ein Durchführen einer Übertragung durch die Übertragungsvorrichtung mittels eines Referenzsignals, das sich von dem ersten spezifizierten Referenzsignal unterscheidet, auf der Ressource, die durch die Bewilligungsinformationen der zeitlichen Planung angegeben worden ist, oder

ein Durchführen einer Übertragung durch das Übertragungsgerät auf einer Übertragungsressource, die sich von der Ressource unterscheidet, die durch die Bewilligungsinformationen der zeitlichen Planung angegeben worden ist;

wobei sich das Referenzsignal von dem zuerst spezifizierten Referenzsignal in mindestens eines der folgenden Elemente unterscheidet:

ein Referenzsignal, das ein Symbol belegt, das ein anderes als das erste angegebene Referenzsignal ist;

ein Referenzsignal, das einen anderen Unterträger belegt, der sich von dem ersten angegebenen Referenzsignal unterscheidet;

ein Referenzsignal, dessen Sequenz sich von der des ersten angegebenes Referenzsignal unterscheidet; oder

ein Referenzsignal, das mittels eines zyklischen Verschiebungsmodus gebildet worden ist, der sich von dem unterscheidet, der für das erste spezifizierte Referenzsignal verwendet wird.

2. Verfahren nach Anspruch 1, wobei das Durchführen einer Übertragung durch die Übertragungsvorrichtung an der Übertragungsressource, die sich von der durch die Bewilligungsinformationen der zeitlichen Planung angegebenen Ressource unterscheidet, mindestens eines der folgenden umfasst:

ein Übertragen des leeren Pakets auf einer Frequenzdomänenressource, die ein Teil einer Frequenzdomänenressource ist, die durch die Bewilligungsinformationen der zeitlichen Planung angegeben worden ist; oder

ein Übertragen des leeren Pakets in einem oder mehreren Symbolen, die einige der Symbole sind, die durch die Bewilligungsinformationen der zeitlichen Planung angegeben worden sind.

3. Verfahren nach Anspruch 1, wobei das Verfahren ferner umfasst, wenn die Übertragungsvorrichtung keine zu sendenden Daten hat,

ein Übertragen eines Referenzsignals in einigen oder allen Symbolen in dem mindestens einen TTI durch die Übertragungsvorrichtung, das durch die Bewilligungsinformationen der zeitlichen Planung angegeben ist; oder

ein Übertragen eines bestimmten Signals durch die Übertragungsvorrichtung.

4. Verfahren nach Anspruch 3, wobei das bestimmte Signal ein physikalischer Uplink-Steuerkanal, PUCCH, ist, wobei eine Ressource, die dem PUCCH entspricht,

voreingestellt worden ist und / oder durch einen weiterentwickelten Knoten B, eNB, konfiguriert worden ist.

5. Verfahren nach Anspruch 1, wobei das Senden eines Zielsignals in dem mindestens einen TTI gemäß der Art der zu übertragenden Daten und der voreingestellten Übertragungsrichtlinie durch die Übertragungsvorrichtung umfasst:

ein Hinzufügen spezifizierter Informationen, die den zu übertragenden Daten entsprechen, an das zu übertragende Datenpaket, wobei die spezifizierten Informationen eines von einer Redundanzversion, RV, des Datenpakets und von Anzeigeinformationen umfassen, die verwendet werden, um anzuzeigen, dass das Datenpaket ein neu zu übertragendes Datenpaket ist oder dass es ein erneut zu übertragendes Datenpaket; oder

dass, wenn die zu übertragenden Daten ein neu zu übertragendes Datenpaket sind, die Übertragungsvorrichtung mittels eines zweiten spezifizierten Referenzsignals eine Übertragung auf einer Ressource durchführt, die durch die Bewilligungsinformationen der zeitlichen Planung angegeben worden ist; und dass, wenn die zu übertragenden Daten ein erneut zu übertragendes Datenpaket sind, die Übertragungsvorrichtung mittels eines Referenzsignals, das sich von dem zweiten spezifizierten Referenzsignal unterscheidet, eine Übertragung auf der Ressource durchführt, die durch die Bewilligungsinformationen der zeitlichen Planung angegeben worden ist; oder

dass, wenn eine RV der zu übertragenden Daten n ist, die Übertragungsvorrichtung mittels eines dritten spezifizierten Referenzsignal eine Übertragung auf einer Ressource durchführt, die durch die Bewilligungsinformationen der zeitlichen Planung angegeben worden ist; und dass, wenn die RV der zu übertragenden Daten m ist, die Übertragungsvorrichtung mittels eines Referenzsignals, das sich von dem dritten spezifizierten Referenzsignal unterscheidet, eine Übertragung auf der Ressource durchführt, die durch die Bewilligungsinformationen der zeitlichen Planung angegeben worden ist, wobei das n und das m zu einem Satz {0,1,2, 3} gehören, und das m nicht gleich dem n ist; oder

dass, wenn die zu übertragenden Daten ein neu zu übertragendes Datenpaket sind, die Übertragungsvorrichtung die zu übertragenden Daten mittels einer voreingestellten ersten spezifizierten temporären Kennung des Mobilfunknetzes, C-RNTI, verschlüsselt; und dass, wenn die zu übertragenden Daten ein erneut zu übertragendes Datenpaket sind, die Übertragungsvorrichtung das Zielsignal mittels eines C-RNTI verschlüsselt, das sich von dem zuerst spezifizierten C-RNTI unterscheidet; oder

dass, wenn die RV der zu übertragenden Daten n ist, die Übertragungsvorrichtung die zu übertragenden Daten mittels eines voreingestellten zweiten spezifizierten C-RNTI verschlüsselt; und dass, wenn die RV der zu übertragenden Daten m ist, die Übertragungsvorrichtung das Zielsignal mittels eines C-RNTI verschlüsselt, die sich von dem zweiten spezifizierten C-RNTI unterscheidet, wobei das n und das m zu einem Satz {0,1,2,3} gehören, und das n nicht gleich dem m ist.

6. Verfahren nach Anspruch 5, wobei das Verschlüsseln der zu übertragenden Daten ein Verschlüsseln der zu übertragenden Daten oder ein Verschlüsseln einer zyklischen Redundanzprüfung, CRC, der zu übertragenden Daten umfasst.

7. Verfahren nach den Ansprüchen 5 und 6, wobei das Referenzsignal, das von dem zweiten bestimmten Referenzsignal verschieden ist, mindestens eines der folgenden umfasst:

ein Referenzsignal, das ein anderes Symbol als das zweite bestimmte Referenzsignal belegt;
ein Referenzsignal, das einen Unterträger belegt, der sich von dem unterscheidet, der von dem zweiten bestimmten Referenzsignal belegt ist;
ein Referenzsignal, dessen Sequenz sich von der des zweiten angegebenen Referenzsignals unterscheidet; oder
ein Referenzsignal, das mittels eines zyklischen Verschiebungsmodus gebildet worden ist, der sich von dem unterscheidet, der für das zweite bestimmte Referenzsignal verwendet worden ist.

8. Verfahren nach Anspruch 1, wobei, wenn eine Übertragungszeit eines neu zu übertragenden Datenpakets und eine Übertragungszeit eines erneut zu übertragenden Datenpakets einer gleichen TTI entsprechen, ein Übertragen des Zielsignals durch die Übertragungsvorrichtung in der mindestens einen TTI gemäß der Art der zu übertragenden Daten und der voreingestellten Übertragungsrichtlinie umfasst:

ein Übertragen des neu zu übertragenden Datenpakets durch die Übertragungsvorrichtung auf einer zugewiesenen Ressource, die den Bewilligungsinformationen der zeitlichen Planung entspricht, und ein Übertragen des erneut zu übertragenden Datenpakets auf einer Ressource, die dem erneut zu übertragenden Datenpaket entspricht; oder
ein Übertragen von mindestens einem von dem neu zu übertragenden Datenpaket oder dem erneut zu übertragenden Datenpaket durch die Übertragungsvorrichtung gemäß einer voreingestellten Priorität.

9. Verfahren nach Anspruch 8, wobei das Übertragen von mindestens einem von dem neu zu übertragenden Datenpaket oder dem erneut zu übertragenden Datenpaket gemäß der voreingestellten Priorität durch die Übertragungsvorrichtung umfasst:

ein bevorzugtes Übertragen des erneut zu übertragenden Datenpakets durch die Übertragungsvorrichtung und ein Überspringen oder ein Verzögern der Übertragung des neu zu übertragenden Datenpakets.

10. Verfahren nach Anspruch 1, wobei, wenn eine Übertragungszeit eines neu zu übertragenden Datenpakets und eine Übertragungszeit eines erneut zu übertragenden Datenpakets einem gleichen TTI entsprechen, und ein erstes übertragenes Datenpaket, das dem erneut zu übertragenden Datenpaket entspricht, ein leeres Paket oder ein Paket einer diskontinuierlichen Übertragung (DTX) ist, das Übertragen des Zielsignals durch die Übertragungsvorrichtung in der mindestens einen TTI gemäß der Art der zu übertragenden Daten und der voreingestellten Übertragungsrichtlinie umfasst:

ein Übertragen des neu zu übertragenden Datenpakets durch die Übertragungsvorrichtung und ein Überspringen der Übertragung des erneut zu übertragenden Datenpakets durch die Übertragungsvorrichtung.

11. Verfahren nach Anspruch 1, wobei das Übertragen des Zielsignals in dem mindestens einen TTI umfasst:

ein Übertragen des Zielsignals in mindestens einem TTI gemäß einem spezifizierten Zyklus.

12. Verfahren nach Anspruch 1, wobei mindestens eines von einem Modulationscodierungsschema, MCS, oder einer Übertragungsblockgröße, TBS, des leeren Pakets voreingestellt ist.

13. Übertragungsvorrichtung, **dadurch gekennzeichnet, dass** sie aufweist:

einen Prozessor; und
einen Speicher, der Anweisungen gespeichert hat, die, wenn sie von dem Prozessor ausgeführt werden, den Prozessor veranlassen, das Verfahren nach einem der Ansprüche 1 bis 12 auszuführen.

**Revendications**

1. Procédé de transmission, dans lequel le procédé comprend :

l'obtention (S101), par un dispositif de transmission, d'informations d'autorisation d'ordonnancement,
dans lequel les informations d'autorisation d'ordonnancement sont utilisées pour ordonnancer le dispositif de transmission afin qu'il effectue une transmission dans au moins un intervalle de temps de transmission, TTI ; et
la transmission (S102), par le dispositif de transmission, d'un signal cible dans l'au moins un TTI selon un type de données devant être transmises et une politique de transmission prédéfinie, dans lequel
la transmission, par le dispositif de transmission, d'un signal cible dans l'au moins un TTI selon un type de données devant être transmises et une politique de transmission prédéfinie comprend :

lorsque les données devant être transmises sont un paquet de données non vide, la réalisation, par le dispositif de transmission utilisant un premier signal de référence spécifié, d'une transmission sur une ressource indiquée par les informations d'autorisation d'ordonnancement ; et
lorsque les données devant être transmises sont un paquet vide, la réalisation d'au moins l'une des opérations suivantes :

la réalisation, par le dispositif de transmission utilisant un signal de référence différent du premier signal de référence spécifié, d'une transmission sur la ressource indiquée par les informations d'autorisation d'ordonnancement, ou
la réalisation, par le dispositif de transmission, d'une transmission sur une ressource de transmission différente de la ressource indiquée par les informations d'autorisation d'ordonnancement ;
dans lequel le signal de référence différent du premier signal de référence spécifié comprend au moins l'un des éléments suivants :

un signal de référence occupant un symbole différent de celui occupé par le premier signal de référence spécifié ;
un signal de référence occupant une sous-porteuse différente de celle occupée par le premier signal de référence spécifié ;
un signal de référence dont la séquence est différente de celle du premier signal de référence spécifié ; ou
un signal de référence formé en utilisant un mode de décalage cyclique différent de celui utilisé pour le premier signal de référence spécifié.

**2.** Procédé de la revendication 1, dans lequel la réalisation, par le dispositif de transmission, d'une transmission sur la ressource de transmission différente de la ressource indiquée par les informations d'autorisation d'ordonnancement comprend au moins l'une des opérations suivantes :

la transmission du paquet vide sur une ressource de domaine de fréquences qui fait partie d'une ressource de domaine de fréquences indiquée par les informations d'autorisation d'ordonnancement ; ou
la transmission du paquet vide dans un ou plusieurs symboles qui font partie des symboles indiqués par les informations d'autorisation d'ordonnancement.

**3.** Procédé de la revendication 1, dans lequel le procédé comprend en outre : lorsque le dispositif de transmission n'a pas de données à transmettre,
la transmission, par le dispositif de transmission, d'un signal de référence dans quelques symboles ou dans tous les symboles dans l'au moins un TTI indiqué par les informations d'autorisation d'ordonnancement ; ou
la transmission, par le dispositif de transmission, d'un signal spécifié.

**4.** Procédé de la revendication 3, dans lequel le signal spécifié est un canal de commande de liaison montante physique, PUCCH, dans lequel une ressource correspondant au PUCCH est prédéfinie et/ou configurée par un nœud B évolué, eNB.

**5.** Procédé de la revendication 1, dans lequel la transmission, par le dispositif de transmission, d'un signal cible dans l'au moins un TTI selon le type de données devant être transmises et la politique de transmission prédéfinie comprend :

l'ajout d'informations spécifiées, correspondant aux données devant être transmises, au paquet de données devant être transmises, dans lequel les informations spécifiées comprennent un élément parmi une version de redondance, RV, du paquet de données et des informations d'indication qui sont utilisées pour indiquer que le paquet de données est un paquet de données devant être nouvellement transmises ou un paquet de données devant être retransmises ; ou
lorsque les données devant être transmises sont un paquet de données devant être nouvellement transmises, la réalisation, par le dispositif de transmission utilisant un deuxième signal de référence spécifié, d'une transmission sur une ressource indiquée par les informations d'autorisation d'ordonnancement ; lorsque les données devant être transmises sont un paquet de données devant être retransmises, la réalisation, par le dispositif de transmission utilisant un signal de référence différent du deuxième signal de référence spécifié, d'une transmission sur la ressource indiquée par les informations d'autorisation d'ordonnancement ; ou
lorsqu'une RV des données devant être transmises est n, la réalisation, par le dispositif de transmission utilisant un troisième signal de référence spécifié, d'une transmission sur une ressource indiquée par les informations d'autorisation d'ordonnancement ; lorsque la RV des données devant être transmises est m, la réalisation, par le dispositif de transmission utilisant un signal de référence différent du troisième signal de référence spécifié, d'une transmission sur la ressource indiquée par les informations d'autorisation d'ordonnancement, dans lequel n et m appartiennent à un ensemble {0, 1, 2, 3}, et n n'est pas égal à m ; ou
lorsque les données devant être transmises sont un paquet de données devant être nouvellement transmises, le brouillage, par le dispositif de transmission, des données devant être transmises en utilisant un premier identifiant temporaire de réseau radio cellulaire, C-RNTI, spécifié prédéfini ; lorsque les données devant être transmises sont un paquet de données devant être retransmises, le brouillage, par le dispositif de transmission, du signal cible en utilisant un C-RNTI différent du premier C-RNTI spécifié ; ou
lorsque la RV des données devant être transmises est n, le brouillage, par le dispositif de transmission, des données devant être transmises en utilisant un deuxième C-RNTI spécifié prédéfini ; lorsque la RV des données devant être transmises est m, le brouillage, par le dispositif de transmission, du signal cible en utilisant un C-RNTI différent du deuxième C-RNTI spécifié, dans lequel n et m appartiennent à un ensemble {0, 1, 2, 3}, et n n'est pas égal à m.

**6.** Procédé de la revendication 5, dans lequel le brouillage des données devant être transmises comprend le brouillage des données devant être transmises ou le brouillage d'un contrôle de redondance cyclique, CRC, des données devant être transmises.

**7.** Procédé des revendications 5 et 6, dans lequel le signal de référence différent du deuxième signal de référence spécifié comprend au moins l'un des éléments suivants :

un signal de référence occupant un symbole différent de celui occupé par le deuxième signal de référence spécifié ;
un signal de référence occupant une sous-porteuse différente de celle occupée par la deuxième signal de référence spécifié ;
un signal de référence dont la séquence est différente de celle du deuxième signal de référence spécifié ; ou
un signal de référence formé en utilisant un mode de décalage cyclique différent de celui utilisé pour le deuxième signal de référence spécifié.

**8.** Procédé de la revendication 1, dans lequel lorsqu'un temps de transmission d'un paquet de données devant être nouvellement transmises et qu'un temps de transmission d'un paquet de données devant être retransmises correspondent à un même TTI, la transmission, par le dispositif de transmission, du signal cible dans l'au moins un TTI selon le type de données devant être transmises et la politique de transmission prédéfinie comprend :

la transmission, par le dispositif de transmission, du paquet de données devant être nouvellement transmises sur une ressource allouée correspondant aux informations d'autorisation d'ordonnancement, et la transmission du paquet de données devant être retransmises sur une ressource correspondant au paquet de données devant être retransmises ; ou
la transmission, par le dispositif de transmission, d'au moins un parmi le paquet de données devant être nouvellement transmises ou le paquet de données devant être retransmises selon une priorité prédéfinie.

**9.** Procédé de la revendication 8, dans lequel la transmission, par le dispositif de transmission, d'au moins un parmi le paquet de données devant être nouvellement transmises ou le paquet de données devant être retransmises selon la priorité prédéfinie comprend :
la transmission préférentielle, par le dispositif de transmission, du paquet de données devant être retransmises, et le saut ou le retard de la transmission du paquet de données devant être nouvellement transmises.

**10.** Procédé de la revendication 1, dans lequel, lorsqu'un temps de transmission d'un paquet de données devant être nouvellement transmises et qu'un temps de transmission d'un paquet de données devant être retransmises correspondent à un même TTI, et qu'un premier paquet de données transmis correspondant au paquet de données devant être retransmises est un paquet vide ou un paquet de transmission discontinue (DTX), la transmission, par le dispositif de transmission, du signal cible dans l'au moins un TTI selon le type de données devant être transmises et la politique de transmission prédéfinie comprend :

la transmission, par le dispositif de transmission, du paquet de données devant être nouvellement transmises, et le saut, par le dispositif de transmission, de la transmission du paquet de données devant être retransmises.

**11.** Procédé de la revendication 1, dans lequel la transmission du signal cible dans l'au moins un TTI comprend :
la transmission du signal cible dans l'au moins un TTI selon un cycle spécifié.

**12.** Procédé de la revendication 1, dans lequel au moins l'un parmi un schéma de codage de modulation, MCS, ou une taille de bloc de transmission, TBS, du paquet vide est prédéfini.

**13.** Dispositif de transmission, **caractérisé en ce qu'**il comprend :

un processeur ; et
une mémoire stockant des instructions qui, lorsqu'elles sont exécutées par le processeur, amènent le processeur à exécuter le procédé de l'une des revendications 1 à 12.

| A transmission device obtains scheduling grant information | S101 |
|---|---|
| The transmission device transmits a target signal in at least one TTI according to a type of to-be-transmitted data and a preset transmission policy | S102 |

**FIG. 1**

| A receiving device receives a target signal transmitted by a transmission device according to scheduling grant information | S201 |
|---|---|
| The receiving device identifies a type of the target signal according to a receiving mode of the target signal | S202 |

**FIG. 2**

30

| Obtaining module | 301 |
|---|---|
| Transmission module | 302 |
| Transmission device | |

**FIG. 3**

—40

| Receiving module | —401 |

| Identification module | —402 |

Receiving device

## FIG. 4

—50

30

40

Transmission system

## FIG. 5

**EP 3 457 739 B1**

REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 201610323351

**Non-patent literature cited in the description**

- Further aspects of UL grant skipping. 3GPP DRAFI; R2-162467 FURIHER ASPECTS OF UL GRANI sKrpprNG, 3RD GENERATTON PARTNERSHTP PROJECT (3GPP), MOBILE COMPETENCE CENTRE. INTEL CORPORATION, 02 April 2016